# EUROPÄISCHE PATENTSCHRIFT

(11) **EP 2 679 794 B1**
(45) Veröffentlichungstag und Bekanntmachung des Hinweises auf die Patenterteilung: **15.08.2018**
(21) Anmeldenummer: 13002993.7
(22) Anmeldetag: 12.06.2013
(51) Int. Cl.: F02K 9/12, F02K 9/28, F02K 9/34, F02K 9/18, F02K 9/22

(54) **Feststoffantrieb**
Solid-fuel propulsion device
Propulseur à propergol solide

(30) Priorität: 26.06.2012 DE 102012012536
(43) Veröffentlichungstag der Anmeldung: 01.01.2014
(73) Patentinhaber: MBDA Deutschland GmbH, 86529 Schrobenhausen (DE)
(72) Erfinder: Engel, Jürgen, D-82178 Puchheim (DE); Waxweiler, Erich, D-81379 München (DE)
(74) Vertreter: Isarpatent

(56) Entgegenhaltungen:
- WO-A1-01/38711
- US-A- 4 478 040
- US-A- 4 594 945

## Beschreibung

### GEBIET DER ERFINDUNG

Die Erfindung betrifft einen Feststoffantrieb, ein Verfahren zum Betreiben eines Feststoffantriebs und einen Flugkörper.

### HINTERGRUND DER ERFINDUNG

Für Raketen und Flugkörper kurzer bis mittlerer Reichweite stellen Feststoffantriebe ein geeignetes, bewährtes und kostengünstiges Antriebsmittel dar. Dabei wird in der Regel ein Treibsatz mit Reduktions- und Oxidationsmittel in fester Form mitgeführt, die miteinander umgesetzt werden. Der Antrieb benötigt normalerweise keine zusätzlichen Reaktionspartner aus der Umgebung.

Einfache Feststoff-Raketenmotoren haben ein festgelegtes Schubprofil. Um möglichst viele verschiedene operationelle Szenarien mit ein- und demselben Raketenmotor optimal bedienen zu können, wäre es wünschenswert, den Schubverlauf in weiten Bereichen beeinflussen zu können.

Es existieren verschiedene Verfahren, mit denen versucht wird, den Schub von Feststoff-Raketen während des Abbrands des Treibsatzes zu modifizieren.

Beispielsweise kann dies durch eine entsprechende geometrische Gestaltung des Treibsatzes geschehen, in dem beispielsweise der Beginn eines Treibsatzes als Stern-Innenbrenner gestaltet ist. Dadurch steht anfangs eine große Abbrandfläche zur Verfügung, die einen relativ großen Schub erzeugen kann (Boost-Phase). Der Rest des Treibsatzes kann dann als Stirnbrenner ausgelegt sein, der weniger Schub über eine längere Zeit erzeugt (Sustain-Phase). Durch dieses Layout steht ein festgelegter Schubverlauf zur Verfügung, der jedoch nicht modifiziert werden kann.

In der DE 31 18 789 ist beschrieben, wie ein variabler Schubverlauf mittels mechanisch verschiebbaren Komponenten im Raketenmotor erzeugt werden kann, die zu unterschiedlichen Brenngeometrien führen. Diese mechanisch und konstruktiv aufwändige Lösung führt allerdings auch zu höherem Gewicht, größerer Komplexität.

In der EP 0 385 004 oder der DE 43 37 444 werden Verfahren beschrieben, in denen die Brennphase von Feststoffantrieben nach dem Zünden wieder gestoppt und später erneut entzünden werden kann. Dies kann einmal oder auch mehrfach geschehen. Neben dem mechanischen, konstruktiven Aufwand kann hierbei von Nachteil sein, dass sich der Schub nicht regeln lässt. Er steht entweder zur Verfügung oder nicht, je nachdem, ob der Raketenmotor brennt oder nicht.

Aus der US 3,293,855 und der US 4,357,795 sind mehrschichtige konzentrische Treibsätze bekannt, deren Abbrand sich stoppen und wieder mehrfach zünden lässt. Je nach Anzahl der gleichzeitig gezündeten konzentrischen Treibsatzringe kann der Schub gesteuert werden. Allerdings ist die Reihenfolge des Abbrands durch den konzentrischen Aufbau bereits festgelegt. WO 01/38711 A1 zeigt ebenfalls einen Feststoffantrieb gemäß dem Stand der Technik.

### ZUSAMMENFASSUNG DER ERFINDUNG

Die eingangs beschriebenen Lösungen sind mechanisch und konstruktiv aufwändige Lösungen, bei denen teilweise sogar mehrere Brennkammern und/oder mehrere Düsen benötigt werden, die zu hoher Komplexität und großem Leergewicht führen.

Es ist Aufgabe der Erfindung, einen einfach aufgebauten, leichten und flexiblen Feststoffantrieb mit einem einstellbaren Schubverlauf bereitzustellen.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft einen Feststoffantrieb, beispielsweise einen Raketenmotor für eine Rakete, bzw. Flugkörper.

Gemäß einer Ausführungsform der Erfindung weist der Feststoffantrieb eine Brennkammer auf, wobei die Brennkammer wenigstens eine erste Partition und eine zweite Partition umfasst, die durch wenigstens eine Trennwand voneinander getrennt sind. Die erste Partition beinhaltet einen ersten Treibsatz, der dazu ausgeführt ist, unabhängig von einem zweiten Treibsatz in der zweiten Partition entzündet zu werden. Mit anderen Worten wird vorgeschlagen, die Brennkammer beispielsweise radial in mehrere Partitionen (im einfachsten Fall zwei) zu unterteilen.

Die Brennkammer kann ein Behälter sein, der in Teilkammern als Partitionen unterteilt ist. Die Partitionen können innerhalb einer gemeinsamen Brennkammer angeordnet sein. Jede der Partitionen kann mit einem Feststoff-Treibstoff als Treibsatz zumindest teilweise gefüllt sein.

Die Trennwand ist dazu ausgeführt, einen Treibsatz in einer zugehörigen Partition davor zu schützen, durch einen anderen abbrennenden Treibsatz in einer anderen Partition entzündet zu werden. Die Trennwand kann beispielsweise eine thermische Isolierung umfassen. Auf diese Weise können die Treibsätze in unterschiedlichen Partitionen zu unterschiedlichen Zeiten entzündet werden und unterschiedlich lange abbrennen.

Mit dem Feststoffantrieb lassen sich die folgenden Vorteile realisieren: Der Feststoffantrieb kann ein in weiten Bereichen modifizierbares Schubprofil aufweisen. Es besteht eine hohe Flexibilität im Design des Feststoffantriebs (wie etwa die Anzahl der Partitionen und/oder unterschiedliche Treibsatzgeometrien). Durch den einfachen Aufbau und die geringe Komplexität entstehen geringe Kosten und der Feststoffantrieb weist ein geringes Gewicht auf. Der Feststoffantrieb muss darüber hinaus keine beweglichen Teile aufweisen. Durch die einfache Lösung ist die Fehleranfälligkeit geringer bzw. die Zuverlässigkeit höher als bei einer komplexen Lösung. Bei beschränktem Bauraum und/oder Gewicht führt die in mehrere Partitionen unterteilte Brennkammer zu einem höheren Gesamtschub, da aufwendige Modifikationen und Zusatzkomponenten weggelassen werden können.

Gemäß einer Ausführungsform der Erfindung weisen die erste Partition und die zweite Partition unterschiedliche Innengeometrien auf. Die beide Partitionen sind beispielsweise verschieden breit oder weisen unterschiedliche Volumen auf. Im Allgemeinen kann die Brennkammer in unterschiedlich große Teilkammern bzw. Partitionen unterteilt bzw. partitioniert werden, die beim Zünden jeweils für einen unterschiedlichen Schub sorgen.

Gemäß einer Ausführungsform der Erfindung weisen der erste Treibsatz und der zweite Treibsatz unterschiedliche Geometrien auf. Das Abbrand-Verhalten eines Treibsatzes wird stark dadurch beeinflusst, wie viel Oberfläche des Treibsatzes gleichzeitig exponiert ist. Die Oberfläche des Treibsatzes in einer Partition kann frei gestaltet werden. Es ist zum Beispiel möglich, dass der erste Treibsatz als Stirnbrenner und der zweite Treibsatz als Innenbrenner ausgeführt ist.

Im Allgemeinen können bei mehr als zwei Partitionen einzelne Partitionen als Stirnbrenner ausgelegt sein, während andere als Innenbrenner arbeiten. Durch die Partitionierung in einzelne Partitionen kann es jedoch möglich sein, dass die theoretisch zur Verfügung stehende Oberfläche bei gleicher Treibsatzmenge für mehrere kleine Innenbrenner etwas geringer ist als bei nur einem großen Innenbrenner. Für die Unterteilung eines Stirnbrenners in mehrere kleinere ergibt sich in Summe fast keine Änderung der Abbrandfläche.

Gemäß einer Ausführungsform der Erfindung umfasst die Brennkammer mehr als zwei Partitionen. Bei mehr als zwei Partitionen kann das Schubprofil des Antriebs noch detaillierter eingestellt werden.

Gemäß einer Ausführungsform der Erfindung sind die erste und die zweite Partitionen symmetrisch zu einer Mittelachse angeordnet. Die Brennkammer kann im Allgemeinen in eine gerade Anzahl an Partitionen unterteilt sein. Falls der induzierte Moment, bzw. die Schwerpunktverlagerung durch den Abbrand einer Partition zu groß wird, kann dieser ausgeglichen werden, indem immer zwei einander gegenüberliegende Partition gleichzeitig gezündet werden. Grundsätzlich ist jedoch auch eine ungerade Anzahl von Partitionen möglich. In diesem Fall können die Steuerung und die Regelung eines zugehörigen Flugkörpers oder einer Rakete aufwändiger sein.

Gemäß einer Ausführungsform der Erfindung ist wenigstens eine Partition mit einem Schutzelement bedeckt. Es können auch alle Partitionen jeweils von einem Schutzelement bedeckt sein. Die Treibsätze in diesen Partitionen können beispielsweise durch eine Membran, Platte oder Klappe vor einem ungewollten Abbrennen geschützt sein., d. h. sie brennen nicht ab, wenn der Treibsatz in einer Nachbarpartition gezündet wird.

Ein Schutzelement ist damit dazu ausgeführt, den Treibsatz in der zugehörigen Partition davor zu schützen, durch einen anderen abbrennenden Treibsatz ungewollt entzündet zu werden. Auch kann das Schutzelement dazu ausgeführt sein, beim Entzünden des Treibsatzes die Verbindung zwischen der Partition und einer Düse freizugeben. Beispielsweise kann das Schutzelement eine Membran umfassen, die platzt. Durch das Zünden der entsprechenden Partition steigt beispielsweise der Innendruck in der Partition so stark an, dass die jeweilige Membran aufreißt und die Gase in die Brennkammer und durch die Düse strömen können. Das Schutzelement kann auch bei Überdruck bersten und in kleine Teile zerfallen, die die Düse verlassen können.

Um ein Durchzünden des gesamten Treibsatzes in allen Partitionen zu verhindern, kann es erforderlich sein, eine thermische Isolierung bei den Trennwänden und/oder des abschließenden Schutzelements zu verwenden.

Gemäß einer Ausführungsform der Erfindung umfasst die Brennkammer eine zylinderförmige Außenwand, die sich in Längsrichtung erstreckt. An ihren Enden kann die Brennkammer von zwei Kappen abgeschlossen werden, wobei an der hinteren Kappe die Düse befestigt ist.

Gemäß einer Ausführungsform der Erfindung erstreckt sich die Trennwand in einer Längsrichtung des Feststoffantriebs. Die Partitionen können sich also im Wesentlichen in Längsrichtung durch die Brennkammer erstrecken.

Gemäß einer Ausführungsform der Erfindung umfasst die Trennwand eine sich in Längsrichtung erstreckende Platte, die an Rändern mit einer Außenwand der Brennkammer verbunden ist. Die Partitionen können auf diese Weise keilförmig oder zylindersegmentförmig aufgebaut sein.

Gemäß einer Ausführungsform der Erfindung ist in der ersten Partition ein erstes Zündelement angeordnet, das dazu ausgeführt ist, den ersten Treibsatz zu entzünden. Auch kann in der zweiten Partition ein zweites Zündelement angeordnet sein, das dazu ausgeführt ist, den zweiten Treibsatz zu entzünden. Beispielsweise kann sich das Zündelement an einem Ende des Treibsatzes in der Partition befinden, das der Düse zugewandt ist. Das Zündelement kann elektrisch ausgelöst werden, beispielsweise durch eine elektrische Steuerung. In jeder Partition kann ein Zündelement angeordnet sein, so dass sich der Zündzeitpunkt für jeden Treibsatz in jeder Partition eigens bestimmen lässt.

Gemäß einer Ausführungsform der Erfindung weist die Brennkammer an einem Ende eine Düse auf, die dazu ausgeführt ist, beim Abbrennen des ersten und zweiten Treibsatzes entstehende Gase auszustoßen. Insbesondere kann lediglich eine Düse für alle Partitionen Verwendung finden.

In Abhängigkeit von der Anzahl der gleichzeitig gezündeten Partitionen kann der Druckverlauf an der Düse sehr unterschiedlich sein. Will man nicht auf Düsen mit veränderbaren Geometrien zurückgreifen, wird sich nicht in jedem Fall ein optimaler Wirkungsgrad erzielen lassen. Die Düse kann jedoch dahingehend optimiert sein, dass ein durchschnittlicher Wirkungsgrad optimal ist.

Ein weiterer Aspekt der Erfindung betrifft ein Verfahren zum Betreiben eines Feststoffantriebs.

Gemäß einer Ausführungsform der Erfindung umfasst das Verfahren die Schritte von: Entzünden eines ersten Treibsatzes in einer ersten Partition einer Brennkammer, die durch eine Trennwand von einer zweiten Partition der Brennkammer getrennt ist; Entzünden eines zweiten Treibsatzes in der zweiten Partition; und Ausstoßen der Verbrennungsgase, die durch das Abbrennen des ersten und des zweiten Treibsatzes entstehen, durch eine gemeinsame Düse.

Durch das Verfahren kann das Schubprofil des Feststoffantriebs mit den folgenden Maßnahmen modifiziert werden. Der Zündzeitpunkt jeder Partition ist jeweils frei wählbar und hängt nicht vom Zündzeitpunkt der übrigen Partitionen ab. Die Partitionen können daher im Extremfall auch alle gemeinsam (maximaler Schub) oder hintereinander (maximale Brenndauer) gezündet werden. Auch beliebige Kombinationen sind möglich.

Gemäß einer Ausführungsform der Erfindung erfolgt das Entzünden des zweiten Treibsatzes zu einem anderen Zeitpunkt als das Entzünden des ersten Treibsatzes.

In Abhängigkeit vom Zeitpunkt, zu dem die einzelnen Partitionen des Feststoffantriebs gezündet werden, lassen sich verschiedene Effekte erzielen: Bei einer Zündung zu Beginn des Fluges eines Flugkörpers oder einer Rakete (Launch) kann eine hohe Anfangsgeschwindigkeit erzielt werden (z.B. Boostphase), in welcher der Flugkörper auf eine gewollte bzw. notwendige Geschwindigkeit beschleunigt wird. Bei einer Zündung während des Fluges eines Flugkörpers oder einer Rakete (Midcourse) kann die Reichweite maximiert oder bei Bedarf eine höhere Querbeschleunigung erzielt werden. Bei einer Zündung am Ende des Fluges eines Flugkörpers oder einer Rakete (Endgame) kann die kinetische Energie maximiert werden, was letztendlich zur entsprechenden Wirkung im Ziel führt.

Ein weiterer Aspekt der Erfindung betrifft einen Flugkörper, insbesondere eine Rakete, mit einem Feststoffantrieb, so wie er obenstehend und untenstehend beschrieben ist. Grundsätzlich kann der Feststoffantrieb aber auch in anderen Anwendungsbereichen eingesetzt werden.

Gemäß einer Ausführungsform der Erfindung ist der Flugkörper dazu ausgeführt, das Verfahren, so wie es obenstehend und untenstehend beschrieben ist, durchzuführen. Dabei kann der Flugkörper weiter eine Steuerung umfassen, die dazu ausgeführt ist, den ersten Treibsatz mittels einem ersten Zündelement und den zweiten Treibsatz mittels einem zweiten Zündelement zu zünden.

Im Folgenden werden Ausführungsbeispiele der Erfindung mit Bezug auf die beiliegenden Figuren detailliert beschrieben.

### KURZE BESCHREIBUNG DER FIGUREN

Fig. 1 zeigt einen schematischen Längsschnitt durch einen Flugkörper gemäß einer Ausführungsform der Erfindung.
Fig. 2 zeigt einen schematischen Querschnitt durch eine Brennkammer gemäß einer Ausführungsform der Erfindung.
Fig. 3 zeigt einen schematischen Querschnitt durch eine Brennkammer gemäß einer weiteren Ausführungsform der Erfindung.
Fig. 4 zeigt einen schematischen Querschnitt durch eine Brennkammer gemäß einer weiteren Ausführungsform der Erfindung.
Fig. 5 zeigt ein Flussdiagramm für ein Verfahren zum Betreiben eines Feststoffantriebs gemäß einer Ausführungsform der Erfindung.
Fig. 6 zeigt ein Diagramm mit einem Schubprofil eines Flugkörpers gemäß einer Ausführungsform der Erfindung.
Fig. 7 zeigt ein Diagramm mit einer Flughöhe eines Flugkörpers gemäß einer Ausführungsform der Erfindung.

Grundsätzlich sind identische oder ähnliche Teile mit den gleichen Bezugszeichen versehen.

### DETAILLIERTE BESCHREIBUNG VON AUSFÜHRUNGSBEISPIELEN

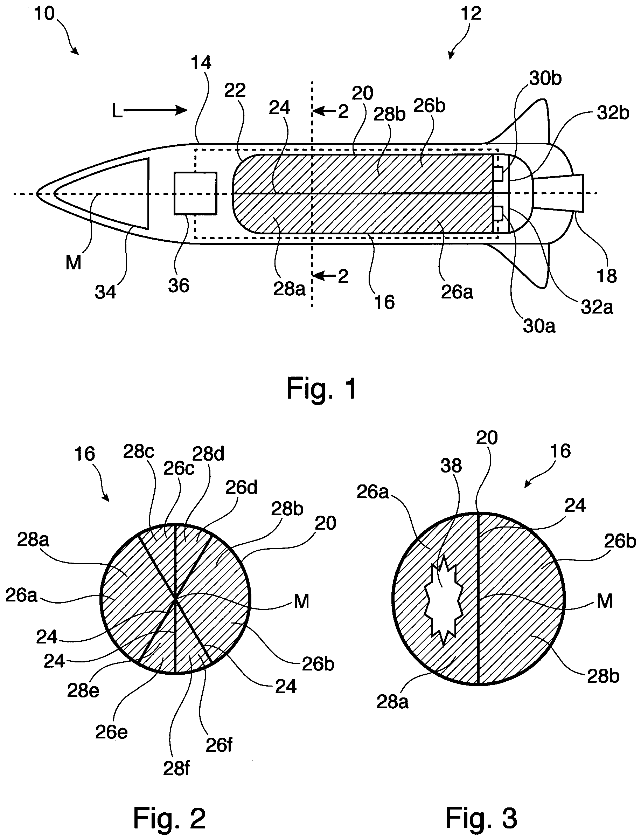

Fig. 1 zeigt einen Flugkörper 10 in der Form einer Rakete 10, die einen Feststoffantrieb 12 bzw. Raketenmotor 12 aufweist, der in einer äußeren Hülle 14 des Flugkörpers 10 angeordnet ist.

Der Raketenantrieb 12 umfasst eine zylindrische Brennkammer 16, die sich in einer Längsrichtung L des Flugkörpers 10 erstreckt. An einem hinteren Ende weist die Brennkammer 16 eine Düse 18 auf, die genauso wie die Brennkammer 16 symmetrisch zu einer Mittelachse M des Flugkörpers 10 angeordnet ist.

Die Brennkammer 16 ist ein zylinderförmiger Behälter, der beispielsweise durch eine zylinderförmige Außenwand 20 begrenzt sein kann und der mit einer Kappe 22 am vorderen Ende verschlossen ist. Am hinteren Ende der Brennkammer 16 befindet sich eine Öffnung, die mit der Düse 18 verbunden ist.

Die Brennkammer 16 ist mit einer Trennwand 24 in eine erste Partition 26a und eine zweite Partition 26b unterteilt, in denen jeweils ein erster Treibsatz 28a und ein zweiter Treibsatz 28b angeordnet ist. Die Trennwand 24 erstreckt sich dabei in Längsrichtung L gerade durch die Brennkammer 16, beispielsweise entlang der Mittelachse M.

Am hinteren Ende der Treibsätze 28a, 28b ist in der zugehörigen Partition 26a, 26b jeweils ein Zündelement 30a, 30b angeordnet, mit dem der entsprechende Treibsatz 28a, 28b entzündet werden kann.

Das hintere Ende jeder Partition 26a, 26b ist mit einem Schutzelement 32a, 32b verschlossen, das den Treibsatz 28a, 28b im Inneren der Partition 26a, 26b vor einem ungewollten Entzünden schützt. Die Schutzelemente 32a, 32b können eine Abdeckung oder Klappe umfassen, die bei einer Erhöhung des Innendrucks in der jeweiligen Partitionen 26a, 26b den Weg zwischen der Partition 26a, 26b und der Düse 18 freigibt. Auch ist es möglich, dass das Schutzelement 32a, 32b durch thermische Einwirkung auf der dem Treibsatz 28a, 28b zugewandten Seite zerstört wird.

Weiter umfasst der Flugkörper 10 eine Nutzlast 34 und eine Steuerung 36, die in Längsrichtung L in der Hülle 14 vor dem Feststoffantrieb 12 angeordnet sind. Die Zündelemente 30a, 30b können von der Steuerung 36 elektrisch aktiviert werden.

Die Brennkammer 16 kann auf unterschiedliche Weise in zwei oder mehrere Partitionen 26a, 26b unterteilt sein. Beispielsweise kann die Brennkammer in genau zwei gleich große Partitionen 26a, 26b unterteilt sein. Die Partitionen 26a, 26b können aber auch unterschiedlich groß (d. h. mit unterschiedlichem Volumen) ausgeführt sein.

Die Fig. 2 zeigt einen Querschnitt entlang der Ebene 2-2 durch die Brennkammer 16, die beispielhaft in mehr als zwei Partitionen 26a, 26b, 26c, 26d, 26e, 26f unterteilt ist. Die Brennkammer 16 der Fig. 2 umfasst sechs unterschiedliche große Partitionen 26a bis 26f, die symmetrisch zur Mittelachse M ausgeführt sind.

Die Trennwände 24 umfassen ebene Platten, die mit Rändern an der Innenseite der Brennkammer 16 befestigt sind und die das Innere der Brennkammer 16 in die keilförmigen Partitionen 26a bis 26f unterteilen.

Die Partitionen 26a bis 26f bzw. die Treibsätze 28a bis 28f sind (punkt)symmetrisch zur Mittelachse M angeordnet. Die Treibsätze 26a, 26b können beispielsweise gleichzeitig gezündet werden, um einen symmetrischen Abbrand zu erzeugen. Zu einem späteren Zeitpunkt können die Treibsätze 26c, 26f und/oder die Treibsätze 26d, 26e gezündet werden. Auf diese Weise befindet sich der Schwerpunkt des Flugkörpers 10 immer auf der Mittelachse M.

Die Fig. 3 zeigt eine alternative Ausführungsform einer Brennkammer 16 analog der Fig. 2. Allerdings ist die Brennkammer 16 der Fig. 3 in zwei Partitionen unterteilt, die gleich groß sind, aber unterschiedlich ausgeführte Treibsätze 28a, 28b beinhalten. Der Treibsatz 28a ist beispielhaft als Stern-Innenbrenner ausgeführt und umfasst eine Öffnung 38, die sich entlang der Längsrichtung L durch den Treibsatz 28a hindurch zieht. Der Treibsatz 28b ist beispielhaft als Stirnbrenner ausgeführt. Mit den unterschiedlich ausgeführten Treibsätzen 28a, 28b können unterschiedlich starke Schubleistungen während verschiedener Flugphasen des Flugkörpers 10 erzielt werden.

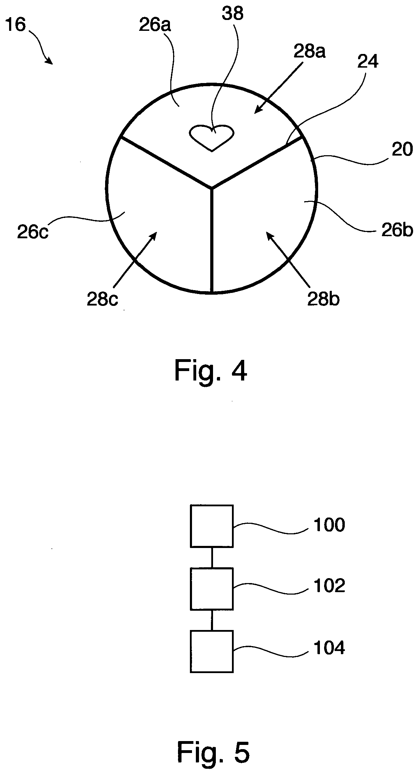

Die Fig. 4 zeigt eine weitere Ausführungsform einer Brennkammer 16, die in drei Partitionen 26a, 26b, 26c unterteilt ist. Die Partitionen 26a, 26b, 26c weisen zwar den gleichen Querschnitt auf, die Partition 26a ist jedoch im Gegensatz zu den Partitionen 26b und 26c, die als Stirnbrenner ausgeführt sind, als Innenbrenner ausgeführt.

Die Fig. 5 zeigt ein Flussdiagramm zum Betreiben des Raketenantriebs 12.

In einem ersten Schritt 100 aktiviert die Steuerung 36 das erste Zündelement 30a. Der erste Treibsatz 28a in der ersten Partition 26a wird entzündet und fängt an, abzubrennen. Dabei wird das erste Schutzelement 32a beseitigt bzw. gibt den Weg zur Düse 18 frei.

In einem zweiten Schritt 102 aktiviert die Steuerung 36 das zweite Zündelement 30b. Der zweite Treibsatz 28b in der zweiten Partition 26b wird entzündet und brennt ab. Dabei wird das zweite Schutzelement 32b beseitigt bzw. gibt den Weg zur Düse 18 frei.

Die beiden Schritte 100 und 102 können gleichzeitig oder zeitlich versetzt zueinander erfolgen. Weiter können analog dem Schritt 102 zusätzliche Treibsätze 28c bis 28f entzündet werden.

In einem Schritt 104 verlassen die Verbrennungsgase, die beim Abbrennen des ersten Treibsatzes 28a und des zweiten Treibsatzes 28b entstehen, die Düse 18 und erzeugen so einen Vorwärtsschub für den Flugkörper 10. Das Schubprofil des Flugkörpers 10, d. h. der Vorwärtsschub über die Zeit kann durch das selektive und zeitlich versetzte Aktivieren der Treibsätze 28a bis 28f eingestellt werden.

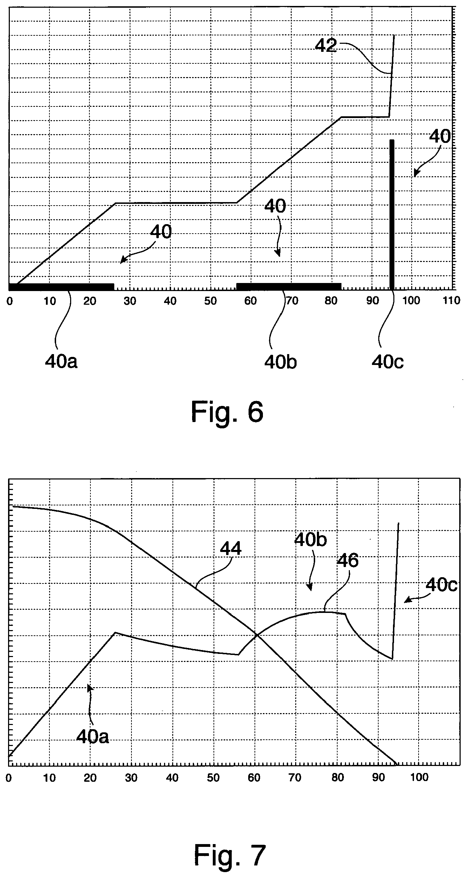

Die Fig. 6 zeigt ein Diagramm mit einem Schubprofil 40 und einem Impulsverlauf 42 eines Flugkörpers 10, der eine in drei Partitionen 26a, 26b, 26c unterteilte Brennkammer 16 aufweist, wie sie etwa in der Fig. 4 dargestellt ist. Im Diagramm ist nach rechts die Zeit in Sekunden aufgetragen. In einem ersten Zeitabschnitt erzeugt der Treibsatz 28b in der Partition 26b einen konstanten Schub 40a, der zu einer konstanten Beschleunigung führt. Im einem zweiten Zeitabschnitt erzeugt der Treibsatz 28c in der Partition 26c einen konstanten Schub 40b analog dem Schub 40a, der erneut zu einer konstanten Beschleunigung führt. Kurz vor dem Ziel wird in einem dritten Zeitabschnitt der Treibsatz 28a in der Partition 28a abgebrannt, der, da diese Partition als Innenbrenner ausgeführt ist, einen wesentlichen höheren Schub 40c und eine entsprechend höhere Beschleunigung erzeugt. Zwischen dem ersten, zweiten und dritten Zeitabschnitt wird der Flugkörper 10 nicht durch das Abbrennen eines Treibsatzes beschleunigt.

Die Fig. 7 zeigt ein Diagramm mit einer Flughöhe 44 und einer Geschwindigkeit 46 des Flugkörpers 10 aus der Fig. 6. Der Flugkörper wird beispielsweise in einer gewissen Höhe von einem Flugzeug abgeworfen und während der Schubphasen 40a, 40b, 40c beschleunigt. Dabei verliert er bis zum Ziel am Boden kontinuierlich an Höhe.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Feststoffantrieb (12) mit einer Brennkammer (16),
wobei die Brennkammer (16) wenigstens eine erste Partition (26a) und eine zweite Partition (26b) umfasst, die durch wenigstens eine Trennwand (24) voneinander getrennt sind;
wobei die erste Partition (26a) einen ersten Treibsatz (28a) beinhaltet, der dazu ausgeführt ist, unabhängig von einem zweiten Treibsatz (28b) in der zweiten Partition (26b) entzündet zu werden;
wobei die Trennwand (24) eine sich in Längsrichtung (L) erstreckende Platte umfasst, die an Rändern mit einer Außenwand (20) der Brennkammer (16) verbunden ist, so dass die Partitionen (26a, 26b) keilförmig oder zylindersegmentförmig aufgebaut sind;
**dadurch gekennzeichnet, dass** der erste Treibsatz (28a) als Innenbrenner und der zweite Treibsatz (28b) als Stirnbrenner ausgeführt ist.

2. Feststoffantrieb (12) nach Anspruch 1,
wobei die erste Partition (26a) und die zweite Partition (26c) unterschiedliche Innengeometrien aufweisen.

3. Feststoffantrieb (12) nach Anspruch 1 oder 2,
wobei der erste Treibsatz (28a) und der zweite Treibsatz (28b) unterschiedliche Geometrien aufweisen.

4. Feststoffantrieb (12) nach einem der vorhergehenden Ansprüche,
wobei die Brennkammer (16) mehr als zwei Partitionen umfasst.

5. Feststoffantrieb (12) nach einem der vorhergehenden Ansprüche,
wobei die erste Partition (26a) und die zweite Partition (26b) symmetrisch zu einer Mittelachse (M) angeordnet sind.

6. Feststoffantrieb (12) nach einem der vorhergehenden Ansprüche,
wobei wenigstens eine Partition (26a, 26b) mit einem Schutzelement (32a, 32b) bedeckt ist.

7. Feststoffantrieb (12) nach einem der vorhergehenden Ansprüche,
wobei die Brennkammer (16) eine zylinderförmige Außenwand (20) umfasst, die sich in einer Längsrichtung (L) des Feststoffantriebs erstreckt.

8. Feststoffantrieb (12) nach einem der vorhergehenden Ansprüche,
wobei in der ersten Partition (26a) ein erstes Zündelement (30a) angeordnet ist, das dazu ausgeführt ist, den ersten Treibsatz (28a) zu entzünden, und in der zweiten Partition (26b) ein zweites Zündelement (30b) angeordnet ist, das dazu ausgeführt ist, den zweiten Treibsatz (28b) zu entzünden.

9. Feststoffantrieb (12) nach einem der vorhergehenden Ansprüche,
wobei die Brennkammer (16) an einem Ende eine Düse (18) aufweist, die dazu ausgeführt ist, beim Abbrennen des ersten Treibsatzes (28a) und des zweiten Treibsatzes (28b) entstehende Gase auszustoßen.

10. Verfahren zum Betreiben eines Feststoffantriebs (12), das Verfahren umfassend die Schritte:
Entzünden eines ersten Treibsatzes (28a) in einer ersten Partition (26a) einer Brennkammer (16), die durch eine Trennwand (24) von einer zweiten Partition (26b) der Brennkammer (16) getrennt ist, wobei die Trennwand (24) eine sich in Längsrichtung (L) erstreckende Platte umfasst, die an Rändern mit einer Außenwand (20) der Brennkammer (16) verbunden ist, so dass die Partitionen (26a, 26b) keilförmig oder zylindersegmentförmig aufgebaut sind;
Entzünden eines zweiten Treibsatzes (28b) in der zweiten Partition (26b);
Ausstoßen der Verbrennungsgase, die durch das Abbrennen des ersten Treibsatzes (28a) und des zweiten Treibsatzes (28b) entstehen, durch eine gemeinsame Düse (18);
**dadurch gekennzeichnet, dass** der erste Treibsatz (28a) als Innenbrenner und der zweite Treibsatz (28b) als Stirnbrenner ausgeführt ist.

11. Verfahren nach Anspruch 10,
wobei das Entzünden des zweiten Treibsatzes (28b) zu einem anderen Zeitpunkt als das Entzünden des ersten Treibsatzes (28a) erfolgt.

12. Flugkörper (10), insbesondere eine Rakete, mit einem Feststoffantrieb (12) nach einem der Ansprüche 1 bis 9.

13. Flugkörper (10) nach Anspruch 12, der dazu ausgeführt ist, das Verfahren nach einem der Ansprüche 10 oder 11 durchzuführen,
wobei der Flugkörper (10) weiter eine Steuerung (36) umfasst, die dazu ausgeführt ist, den ersten Treibsatz (28a) mittels eines ersten Zündelements (30a) und den zweiten Treibsatz (28b) mittels eines zweiten Zündelements (30b) zu zünden.

## Claims

1. Solid fuel propulsion device (12) having a combustion chamber (16),
wherein the combustion chamber (16) comprises at least one first partition (26a) and a second partition (26b) that are separated from one another by means of at least one dividing wall (24);
wherein the first partition (26a) includes a first propellant (28a) that is configured so as to be ignited independently of a second propellant (28b) in the second partition (26b);
wherein the dividing wall (24) comprises a plate that extends in the longitudinal direction (L) and is connected on edges to an outer wall (20) of the combustion chamber (16) with the result that the partitions (26a, 26b) are constructed as wedge-shaped or cylinder segment-shaped;
**characterised in that**
the first propellant (28a) is configured as a core burner and the second propellant (28b) is configured as an end burner.

2. Solid fuel propulsion device (12) according to claim 1, wherein the first partition (26a) and the second partition (26c) comprise different core geometries.

3. Solid fuel propulsion device (12) according to claim 1 or 2,
wherein the first propellant (28a) and the second propellant (28b) comprise different geometries.

4. Solid fuel propulsion device (12) according to any one of the preceding claims,
wherein the combustion chamber (16) comprises more than two partitions.

5. Solid fuel propulsion device (12) according to any one of the preceding claims,
wherein the first partition (26a) and the second partition (26b) are arranged symmetrically with respect to a central axis M.

6. Solid fuel propulsion device (12) according to any one of the preceding claims,
wherein at least one partition (26a, 26b) is covered by a protective element (32a, 32b).

7. Solid fuel propulsion device (12) according to any one of the preceding claims,
wherein the internal combustion chamber (16) comprises a cylindrical outer wall (20) that extends in a longitudinal direction (L) of the solid fuel propulsion device.

8. Solid fuel propulsion device (12) according to any one of the preceding claims,
wherein a first ignition element (30a) is arranged in the first partition (26a) and said first ignition element is configured so as to ignite the first propellant (28a), and a second ignition element (30b) is arranged in the second partition (26b) and the second ignition element is configured so as to ignite the second propellant (28b).

9. Solid fuel propulsion device (12) according to any one of the preceding claims,
wherein the combustion chamber (16) comprises on one end a nozzle (18) that is configured so as to discharge gases that occur when the first propellant (28a) and the second propellant (28b) are burned.

10. Method for operating a solid fuel propulsion device (12), the method comprising the following steps:
igniting a first propellant (28a) in a first partition (26a) of an internal combustion chamber (16) that is separated by means of a dividing wall (24) from a second partition (26b) of the combustion chamber (16), wherein the dividing wall (24) comprises a plate that extends in the longitudinal direction (L) and said plate is connected on edges to an outer wall (20) of the internal combustion chamber (16) with the result that the partitions (26a, 26b) are constructed as wedge-shaped or cylinder segment-shaped;
igniting a second propellant (28b) in the second partition (26b);
discharging the combustion gases, which occur as a result of burning the first propellant (28a) and the second propellant (28b), by means of a common nozzle (18);
**characterised in that**
the first propellant (28a) is configured as a core burner and the second propellant (28b) is configured as an end burner.

11. Method according to claim 10,
wherein the second propellant (28b) is ignited at a point in time that is different to the point in time at which the first propellant (28a) is ignited.

12. Missile (10), in particular a rocket, having a solid fuel propulsion device (12) according to any one of the claims 1 to 9.

13. Missile (10) according to claim 12 and said missile is configured so as to implement the method according to any one of the claims 10 or 11,
wherein the missile (10) comprises a further controller (36) that is configured so as to ignite the first propellant (28a) by means of a first ignition element (30a) and the second propellant (28b) by means of a second ignition element (30b).

## Revendications

1. Dispositif d'entraînement à propergol solide (12) comportant une chambre de combustion (16),
dans lequel la chambre à combustion (16) comprend au moins une première division (26a) et une deuxième division (26b) qui sont séparées l'une de l'autre par au moins une paroi de séparation (24) ;
dans lequel la première division (26a) contient un premier propergol solide (28a) qui est conçu pour être allumé indépendamment d'un deuxième propergol (28b) dans la deuxième division (26b) ;
dans lequel la paroi de séparation (24) comprend une plaque s'étendant dans le sens longitudinal (L) laquelle est reliée sur des bords à une paroi extérieure (20) de la chambre de combustion(16) de sorte que les divisions (26a, 26b) sont construites en forme de clavette ou de segment de cylindre ;
**caractérisé en ce que**
le premier propergol (28a) est conçu comme brûleur interne et **en ce que** le deuxième propergol (28b) est conçu comme brûleur frontal.

2. Dispositif d'entraînement à propergol solide (12) selon la revendication 1,
dans lequel la première division (26a) et la deuxième division (26c) présentent des géométries internes différentes.

3. Dispositif d'entraînement à propergol solide (12) selon la revendication 1 ou 2,
dans lequel le premier propergol (28a) et le deuxième propergol (28b) présentent des géométries différentes.

4. Dispositif d'entraînement à propergol solide (12) selon l'une quelconque des revendications précédentes, dans lequel la chambre de combustion (16) comprend plus que deux divisions.

5. Dispositif d'entraînement à propergol solide (12) selon l'une quelconque des revendications précédentes,
dans lequel la première division (26a) et la deuxième division (26b) sont disposées symétriquement par rapport à un axe médian (M).

6. Dispositif d'entraînement à propergol solide (12) selon l'une quelconque des revendications précédentes,
dans lequel au moins une division (26a, 26b) est recouverte par un élément de protection (32a, 32b).

7. Dispositif d'entraînement à propergol solide (12) selon l'une quelconque des revendications précédentes,
dans lequel la chambre de combustion (16) comprend une paroi extérieure (20) cylindrique qui s'étend dans un sens longitudinal (L) du dispositif d'entraînement à propergol solide.

8. Dispositif d'entraînement à propergol solide (12) selon l'une quelconque des revendications précédentes,
dans lequel un premier élément d'allumage (30a) est disposé dans la première division (26a), lequel est conçu pour allumer le premier propergol (28a), et en ce qu'un deuxième élément d'allumage (30b) est disposé dans la deuxième division (26b), lequel est conçu pour allumer le deuxième propergol (28b).

9. Dispositif d'entraînement à propergol solide (12) selon l'une quelconque des revendications précédentes,
dans lequel la chambre de combustion (16) présente une buse (18) à une extrémité, laquelle buse est réalisée pour expulser les gaz se produisant lors de la combustion du premier propergol (28a) et du deuxième propergol (28b) .

10. Procédé de fonctionnement d'un dispositif d'entraînement à propergol solide (12), le procédé comprenant les étapes :
allumage d'un premier propergol (28a) dans une première division (26a) d'une chambre de combustion (16), laquelle division est séparée d'une deuxième division (26b) de la chambre de combustion (16) par une paroi de séparation (24), dans lequel procédé la paroi de séparation (24) comprend une plaque s'étendant dans le sens longitudinal (L), laquelle est reliée sur des bords à une paroi extérieure (20) de la chambre de combustion (16) de sorte que les divisions (26a, 26b) sont construites en forme de clavette ou de segment de cylindre ;
allumage d'un deuxième propergol (28b) dans la deuxième division (26b) ;
éjection des gaz de combustion qui se produisent en raison de la combustion du premier propergol (28a) et du deuxième propergol (28b), à travers une buse commune (18) ; **caractérisé en ce que**
le premier propergol (28a) est conçu comme brûleur interne et **en ce que** le deuxième propergol (28b) est conçu comme brûleur frontal.

11. Procédé selon la revendication 10,
dans lequel l'allumage du deuxième propergol (28b) est réalisé à un autre moment que l'allumage du premier propergol (28a).

12. Missile (10), notamment fusée, comprenant un dispositif d'entraînement à propergol solide (12) selon l'une quelconque des revendications 1 à 9.

13. Missile (10) selon la revendication 12, lequel est réalisé pour exécuter le procédé selon l'une quelconque des revendications 10 ou 11,
dans lequel le missile (10) comprend en outre une commande (36) qui est réalisée pour allumer le premier propergol (28a) au moyen d'un premier élément d'allumage (30a) et pour allumer le deuxième propergol (28b) au moyen d'un deuxième élément d'allumage (30b).
